# EUROPÄISCHE PATENTANMELDUNG

(11) **EP 3 015 946 A2**
(43) Veröffentlichungstag der Anmeldung: **04.05.2016**
(21) Anmeldenummer: 15189252.8
(22) Anmeldetag: 12.10.2015
(51) Int. Cl.: G05G 5/05, G05G 5/06, G05G 1/02, G05G 1/08

(54) **HAUSHALTSGERÄT, INSBESONDERE DURCHLAUFERHITZER**

(30) Priorität: 28.10.2014 DE 102014221974
(71) Anmelder: BSH Hausgeräte GmbH, 81739 München (DE)
(72) Erfinder: Thies, Manuel, 85386 Dietersheim (DE); Radl, Mathias, 83374 Oderberg (DE); Arsenyev, Anton, 82110 Germing (DE)

(57) **Zusammenfassung**

Es wird ein Haushaltsgerät, insbesondere Durchlauferhitzer, bereitgestellt. Das erfindungsgemäße Haushaltsgerät umfasst eine Bedienblende und eine axial an der Bedien-blende führbaren Handhabe zum Betätigen einer Regeleinrichtung des Haushaltsgeräts. Gemäß der vorliegenden Erfindung wird zur Rückführung der Handhabe in einer unbetätigten Ausgangsposition ein Federring zwischen Bedienblende und Handhabe an-geordnet ist.

## Beschreibung

### Hintergrund der Erfindung

Die vorliegende Erfindung betrifft ein Haushaltsgerät, insbesondere einen elektrischen Durchlauferhitzer für den Einsatz im häuslichen Umfeld.

### Stand der Technik

Eine Bedienblende eines Haushaltgeräts wie beispielsweise elektrische Durchlauferhitzer verdeckt üblicherweise eine oder mehrere Regeleinrichtungen zum Ansteuern des Haushaltgeräts. Auf oder an einer Vorderseite der Bedienblende können Bedienelemente wie beispielsweise Drehknöpfe zum Betätigen der Regeleinrichtungen vorgesehen sein.

So ist beispielsweise in der WO 2009/077330 A1 ein Haushaltgerät mit einem Drehknopf offenbart, der mit Hilfe von an der Bedienblende vorgesehenen Rasthaken mit der Bedienblende verbunden ist. Auch weitere Drehknopfe sind bekannt, welche es einem Benutzer erlauben, beispielsweise die Wassertemperatur eines elektrischen Durchlauferhitzers gradgenau einstellen zu können.

### Der Erfindung zugrundeliegende Aufgabe

Vor diesem Hintergrund besteht eine Aufgabe der vorliegenden Erfindung darin, ein verbessertes Haushaltgerät zur Verfügung zu stellen, welches einen sicheren Betrieb gewährleistet und ferner die Haptik der Steuerung für einen Benutzer verbessert.

### Erfindungsgemäße Lösung

Diese Aufgabe wird durch ein Haushaltsgerät, insbesondere elektrischen Durchlauferhitzer, gemäß Anspruch 1 gelöst. Bevorzugte Ausgestaltungen sind in den abhängigen Ansprüchen angegeben.

Es wird ein Haushaltsgerät, insbesondere Durchlauferhitzer, bereitgestellt. Das erfindungsgemäße Haushaltsgerät umfasst eine Bedienblende und eine axial an der Bedienblende führbaren Handhabe zum Betätigen einer Regeleinrichtung des Haushaltsgeräts. Gemäß der vorliegenden Erfindung wird zur Rückführung der Handhabe in einer unbetätigten Ausgangsposition ein Federring zwischen Bedienblende und Handhabe angeordnet ist. Folglich kann eine Rückfederung der Handhabe gewährleistet werden und ferner auch eine angenehme Haptik für einen Benutzer bereitgestellt werden. Durch die Ausbildung des Federrings gemäß der Erfindung kann eine beliebige Ausrichtung des Federrings in die Blende erfolgen, wobei sich dieser automatisch bzw. selbstständig justiert bzw. arretiert. Folglich können Fehler bei der Endmontage in der Produktion des Haushaltsgeräts praktisch ausgeschlossen werden.

Der Federring gemäß der folgenden Erfindung ist insbesondere als Wellscheibe bzw. als gewellte Scheibe ausgebildet. D.h. dieser weist eine in der Seitenansicht eine gewellte Form auf. Dadurch können besonders hohe Federhübe gewährleistet werden.

Der Federring ist symmetrisch ausgebildet, dergestalt dass keine Falschmontage entstehen kann. D.h. in der Herstellung kann der Federring einfach eingesetzt werden, ohne dass auf eine besondere Ausrichtung geachtet werden muss.

Der Federring weist auf seiner oberen und unteren Seite, d.h. zum Drehwähler bzw. zur Blende hin, auf dem Umfang rotationssymmetrisch angeordnete Anformungen welche zur Fixierung und zur haptischen Rückkoppelung dienen. Die unteren und oberen Anformungen sind jeweils auf dem Umfang um einen bestimmten Winkel versetzt, um eine fehlertolerante Montage zu gewährleisten. Der Monteur legt den Federring einfach ein und muss nicht auf eine besondere Ausrichtung achten.

Regeleinrichtung bedeutet beispielsweise eine Einrichtung, welche den Betrieb des Haushaltsgeräts kontrolliert, d.h. regelt und/oder steuert. Die Regeleinrichtung umfasst unter Anderem einen Kontroller und weitere elektronische Bauteile, welche eingerichtet sind Sensorenwerte zu erfassen und zu verarbeiten. Weiter kann die Regeleinrichtung Einstellwerte, die beispielsweise durch einen Benutzer eingegeben werden, verarbeiten.

Demgemäß wird ein verbessertes Haushaltsgerät bereitgestellt, welches eine genaue und sichere Steuerung erlaubt. Insbesondere kann die Handhabe für die Steuerung einfach montiert werden und durch die verwendeten Komponenten wird eine fehlertolerante Produktion des Haushaltsgerätes, insbesondere des elektrischen Durchlauferhitzers ermöglicht.

### Bevorzugte Ausgestaltung der Erfindung

Gemäß einer Ausführungsform der Erfindung ist die Handhabe als Dreh-/Drückeinheit ausgebildet und weist einen Führungsabschnitt auf, der durch einen Durchbruch der Bedienblende geführt ist, wobei der Federring um den Führungsabschnitt angeordnet ist. Folglich kann eine Bauraum optimierte Geometrie bereitgestellt werden, wobei die Dreh-/Drückeinheit axial und/oder radial gesichert wird. Durch die Anordnung des Federrings um den Führungsabschnitt kann eine gleichmäßige haptische Rückmeldung der Dreh-/Drückeinheit für einen Benutzer gewährleistet werde. Weiter, falls die Dreh-/Drückeinheit durch Drücken betätigt wird, kann eine symmetrische axiale Verschiebung und Rückfederung gewährleistet werden, ohne dass Verkanntungen oder desgleichen auftreten können.

Der Führungsabschnitt weist ein Gegenrastmittel auf, das mit einem am Federring ausgebildeten Rastmittel zusammenwirkt. Somit kann eine haptische Rückmeldung des Inkrementalgebers bzw. der Dreh-/Drückeinheit gewährleistet werden. Das Gegenrastmittel ist um den Führungsabschnitt koaxial ausgebildet und weist einen rotationssymmetrischen Aufbau auf. D.h. alle Gegenrastmittel verlaufen symmetrisch um den Führungsabschnitt herum und stellen eine kompletten 360° Eingabebereich bereit. Die Einheit kann somit durchgedreht werden und erreicht nach einer kompletten 360° Drehung wieder ihre Ausgangslage.

Gemäß einer Ausführungsform der Erfindung verläuft das Gegenrastmittel um den Führungsabschnitt koaxial. Demnach kann ein kompakter Aufbau gesichert werden, und vielmehr eine 360° Betätigung der Dreh-/Drückeinheit ermöglicht werden.

Das Gegenrastmittel kann materialeinstückig mit dem Führungsabschnitt ausgebildet sein. Dies ermöglicht eine kosteneffiziente Herstellung des Bauteils.

Es ist bevorzugt, dass der Federring entlang seines Umfanges als Rastmittel ausgebildete Anformungen aufweist, welche auf der dem Gegenrastmittel zugewandten Seite des Federrings ausgebildet sind. Diese Anformungen gewährleisten eine haptisch angenehme Bedienung der Dreh-/Drückeinheit für einen Benutzer und ferner kann diese Geometrie leicht produziert bzw. implementiert werden.

Es ist bevorzugt, dass der Federring der Bedienblende zugewandten Seite Fixiermittel umfasst, welche den Federring an der Bedienblende (10) haltern. Diese Mittel sind dergestalt ausgebildet, dass der Federring stets Lage richtig in die Blende eingesetzt und gehaltert werden kann. Demnach sind Fehlmontagen des Federrings weitgehend ausgeschlossen.

Zur Gewährleistung einer Wasserundurchlässigkeit ist zwischen Handhabe und Bedienblende eine Labyrinthdichtung ausgebildet. Diese Dichtung funktioniert ohne weitere Dichtungsringen und ist kosteneffizient herstellbar.

Ferner weist die Bedienblende eine als Wasserableitkanal ausgebildete Öffnung auf, die im Bereich der Labyrinthdichtung ausgebildet ist, und zum Abführen von Wasser ausgebildet ist.

Weitere mögliche Implementierungen des Haushaltgeräts umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Haushaltgeräts hinzufügen.

Weitere vorteilhafte Ausgestaltungen und Aspekte des Haushaltsgeräts sind Gegenstand der Unteransprüche sowie der im Folgenden beschriebenen Ausführungsbeispiele des Haushaltsgeräts. Im Weiteren wird das Haushaltsgerät anhand von bevorzugten Ausführungsformen unter Bezugnahme auf die beigelegten Figuren näher erläutert.

### Kurzbeschreibung der Figuren

Fig. 1 zeigt eine schematische perspektivische Teilansicht einer Ausführungsform eines Haushaltsgeräts;
Fig. 2a zeigt eine Handhabe für das Haushaltsgerät gemäß der Erfindug;
Fig. 2b zeigt den Federring für die Handhabe gemäß der vorliegenden Erfindung; und
Fig. 3 zeigt eine weitere Teilansicht des Haushaltsgerätes, wobei schematisch die Labyrinthdichtung angedeutet ist.

### Ausführliche Beschreibung

Bei der nachfolgenden Beschreibung zweier bevorzugter Ausführungsformen der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

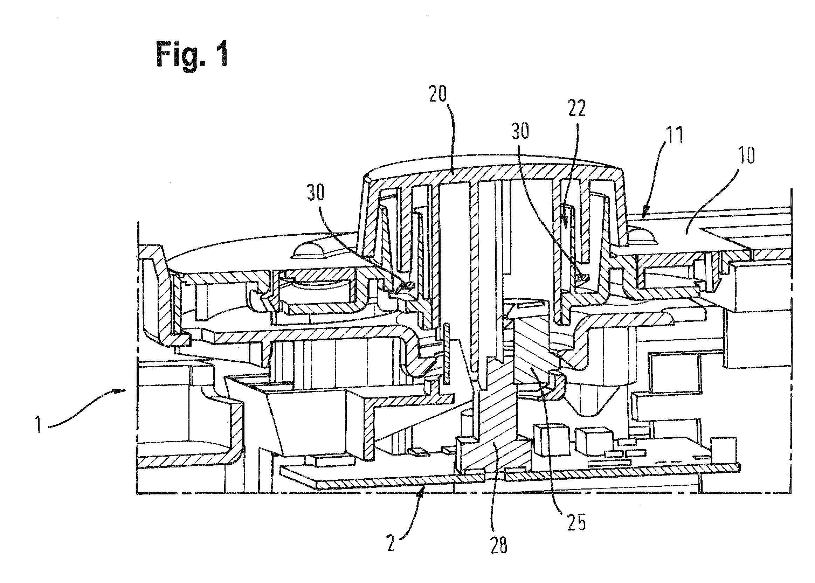

Die Fig. 1 zeigt eine schematische perspektivische Teilansicht eines Haushaltsgeräts 1. Das Haushaltsgerät 1 kann ein Haushaltsgargerät wie beispielsweise ein elektrischer Durchlauferhitzer, ein Backofen, ein Mikrowellengerät, ein Backofen mit Mikrowellenfunktion oder dergleichen sein. Weiterhin kann das Haushaltsgerät 1 ein Kühlgerät, eine Waschmaschine, ein Wäschetrockner, eine Geschirrspülmaschine oder dergleichen sein.

Zur Verdeutlichung ist der Anschnitt des Haushaltsgeräts in welchem die Handhabe vorgesehen ist stark vergrößert dargestellt. Die Handhabe 20 gemäß dieser Ausführungsform ist als Dreh-/Drückeinheit ausgebildet, welche beispielsweise zur Temperatureinstellung des elektrischen oder elektronischen Durchlauferhitzers verwendbar ist. In dieser Ausführungsform ist die Handhabe als Drehwähler 20 ausgebildet. Der Drehwähler ist über ein Kupplungsstück 25 mit einem Inkrementalgeber 28 auf der Steuerplatine 2 wirkverbunden. Somit können Benutzereinstellungen an die Regeleinrichtung 2, welche die Steuerplatine umfasst, weitergegeben werden. Diese Einstellungen können beispielsweise Temperaturwahl sein, wobei durch den Drehwähler die einzustellenden Werte bestätigt werden.

Gleichzeitig kann mittels eines Anschlages am Drehwähler eine Kraft auf den Inkrementalgeber 27 übertragen werden, um den im Inkrementalgeber 28 integrierten Taster (nicht gezeigt) zu betätigen. Zur Rückfederung und zur haptischen Ausbildung des Drehwählers wird gemäß der Erfindung ein Federring 30 zwischen Drehwähler 20 und Bedienblende 10 des Haushaltsgeräts 1 vorgesehen. Durch seine besondere, kreisförmige Geometrie kann der Federring in beliebiger Ausrichtung in die Blende 10 eingesetzt werden, wobeis sich dieser automatisch selbst positioniert, d.h. ausrichtet. Ferner kann der Federring 30 ein Rastmittel 33 umfassen, welches mit einem Gegenrastmittel am Drehwähler zusammenwirkt, um die haptische Wirkung des Inkrementalgebers 28 einem Benutzer zu signalisieren. Der Drehwähler gemäß der Erfindung umfasst lediglich drei Funktionsbauteile: Blende, Drehwähler und Federring. Zum Führen des Drehwählers 20 durch die Blende 10, kann dieser einen Führungsabschnitt 22 umfassen, welcher eine radiale und/oder axiale Lagerung gewährleistet.

Durch die Ausbildung des Drehwählers kann ferner eine Wasserfestigkeit erreicht werden, die insbesondere die Anforderungen der Schutzartklasse IP25 erfüllen kann.

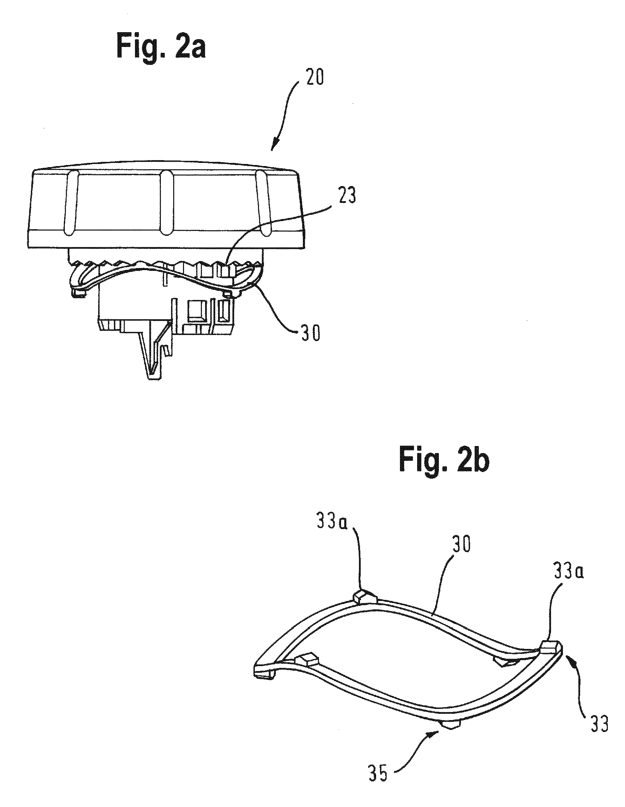

Die Fig. 2a und 2b zeigen das Zusammenspiel zwischen dem erfindungsgemäßen federring 30 und dem Drehwähler 20, wobei Fig. 2b den Ring 30 vergrößert darstellt. Zur haptischen Rückmeldung des Inkrementalgebers 28, werden um den Führungsabschnitt 22 des Drehwählers Gegenrastmittel 23 implementiert, die mit entsprechenden Rastmittelsn 33a, 33 des Federrings 30 zusammenwirken. Somit hat der Benutzer stets eine haptische Rückmeldung seiner Eingaben.

Im unteren Bereich, d.h. zur Blende 10 hin, weist der Federring Fixiermittel 35 auf, welche eine Sicherung des Federrings 30 in der Blende 10 gewährleisten. Ferner durch den Aufbau des Federrings 30 kann eine selbstjustierende Architektur bei der Endmontage der Drehwählereinheit gewährleistet werden. Durch den kreisrunden Aufbau des Federrings ist die Endmontage quasi fehlerfrei durchführbar, da der Ring 30 sich praktisch selbst arretiert.

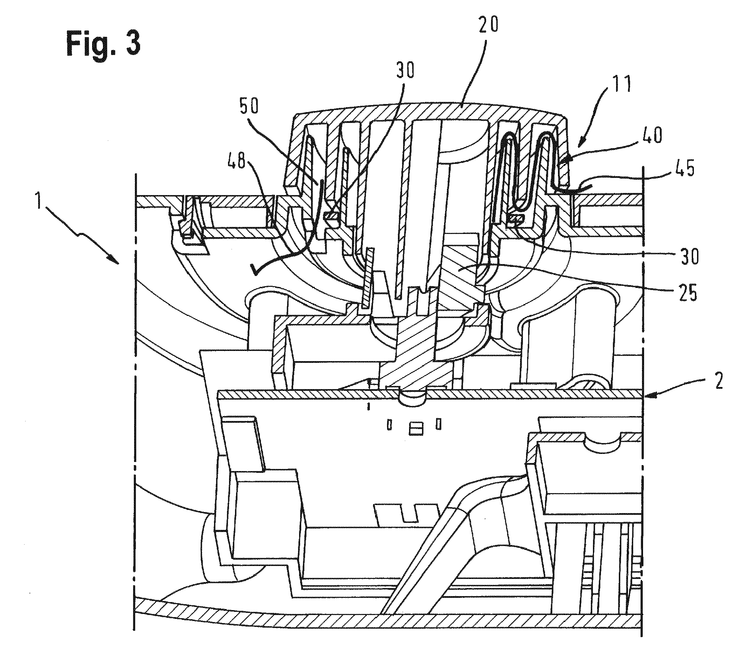

Fig. 3 zeigt die Wirkung der Labyrinthdichtung 40 des Drehwählers 20 und ferner des Auslasskanals bzw. Öffnung 50. Die Labyrinthdichtung 40 umfasst eine Vielzahl an parallel verlaufenden Rippen, welche abwechselnd im Drehwähler und/oder in der Blende ausgebildet sind. Diese Geometrie 40 gewährleistet eine labyrinthartige Verbindung, die einen Spritzwasserschutz der Klasse IP25 bereitstellt. Die Spalten zwischen Blende 10 und Drehwähler 20 im Bereich der Labyrinthdichtung 40 dürfen nicht zu eng gestaltet sein, damit keine negativen Kapillareffekte im feuchten Bereich entstehen können. Weiter ist eine Öffnung 50 in der Blende 10 vorgesehen, welche als Auslasskanal arbeitet und eindringende Wasser ableiten kann. Folglich kann die Schutzart IP25 gewährleistet werden.

Obwohl die vorliegende Erfindung anhand eines Ausführungsbeispiels beschrieben wurde, ist sie vielfältig modifizierbar.

Durch die Erfindung wird eine Haushaltsgerät bereitgestellt, welches leicht undfehlertolerant montierbar bzw. herstellbar ist, und ferner kann das Gehäuse der Schutzart IP25 entsprechen. D.h. der Abschnitt des Gehäuses des Haushaltsgerätes, in welchem der Drehwähler und die Blende integriert sind, können die Anforderungen der Schutzart IP25 erfüllen. Somit kann ein sicherer Betrieb des Haushaltsgeräts bereitgestellt werden.

### Bezugszeichenliste:

- 1: Haushaltsgerät, beispielsweise elektrischer Durchlauferhitzer im Haushalt
- 2: Regeleinrichtung, beispielsweise Steuerplatine
- 10: Bedienblende
- 11: Durchbruch
- 20: Handhabe, insbesondere Dreh-/Drückknopf
- 22: Führungsabschnitt
- 23: Gegenrastmittel am Führungsabschnitt
- 25: Kupplungsstück
- 28: Inkrementalgeber
- 30: Federring
- 33: Rastmittel des Federrings
- 35: Fixiermittel
- 40: Labyrinthdichtung
- 45: Wirkweise der Labyrinthdichtung
- 48: Wirkweise des Auslasskanals
- 50: Öffnung bzw. Auslasskanal zum Abführen von Wasser

## Patentansprüche

1. Haushaltsgerät (1), insbesondere Durchlauferhitzer, mit einer Bedienblende (10) und einer axial an der Bedienblende (10) führbaren Handhabe (20) zum Betätigen einer Regeleinrichtung (2) des Haushaltsgeräts (1), **dadurch gekennzeichnet, dass** zur Rückführung der Handhabe in einer unbetätigten Ausgangsposition ein Federring (30) zwischen Bedienblende (10) und Handhabe (20) angeordnet ist.

2. Haushaltsgerät nach Anspruch 1, **dadurch gekennzeichnet, dass** die Handhabe (20) als Dreh-/Drückeinheit ausgebildet ist und einen Führungsabschnitt (22) umfasst, der durch einen Durchbruch (11) der Bedienblende (10) geführt ist, wobei der Federring (30) um den Führungsabschnitt (22) angeordnet ist.

3. Haushaltsgerät nach Anspruch 2, **dadurch gekennzeichnet, dass** der Führungsabschnitt (22) ein Gegenrastmittel (23) aufweist, das mit einem am Federring (30) ausgebildeten Rastmittel (33) zusammenwirkt.

4. Haushaltsgerät nach einem der vorhergehenden Ansprüche, **dadurch gekennzeichnet, dass** das Gegenrastmittel (23) um den Führungsabschnitt (22) koaxial verläuft.

5. Haushaltsgerät nach einem der vorhergehenden Ansprüche, **dadurch gekennzeichnet, dass** das Gegenrastmittel (23) materialeinstückig mit dem Führungsabschnitt (22) ausgebildet ist.

6. Haushaltsgerät nach einem der vorhergehenden Ansprüche, **dadurch gekennzeichnet, dass** der Federring (30) entlang seines Umfanges als Rastmittel (33) ausgebildete Anformungen (33a) aufweist, welche auf der dem Gegenrastmittel (23) zugewandten Seite des Federrings (30) ausgebildet sind.

7. Haushaltsgerät nach einem der vorhergehenden Ansprüche, **dadurch gekennzeichnet, dass** der Federring (30) der Bedienblende (10) zugewandten Seite Fixiermittel (35) umfasst, welche den Federring (30) an der Bedienblende (10) haltern.

8. Haushaltsgerät nach einem der vorhergehenden Ansprüche, **dadurch gekennzeichnet, dass** zwischen Handhabe (20) und Bedienblende (10) eine Labyrinthdichtung (40) ausgebildet ist.

9. Haushaltsgerät nach einem der vorhergehenden Ansprüche, **dadurch gekennzeichnet, dass** die Bedienblende (10) eine als Wasserableitkanal ausgebildete Öffnung (50) aufweist, die im Bereich der Labyrinthdichtung (40) ausgebildet ist, und zum Abführen von Wasser ausgebildet ist.
